# EUROPEAN PATENT APPLICATION

(11) **EP 1 739 965 A1**
(43) Date of publication of application: **03.01.2007**
(21) Application number: 05253967.3
(22) Date of filing: 27.06.2005
(51) Int. Cl.: H04N 7/15, H04N 7/14

(54) **Method and system for processing video data**

(71) Applicant: Matsuhita Electric Industrial Co., Ltd., Kadoma-shi, Osaka 571 8501 (JP)
(72) Inventor: Zaharia-Rayner, Ramona, Panasonic Broadband Comm., Wokingham, Berkshire, RG40 2AQ (GB)
(74) Representative: Haley, Stephen

(57) **Abstract**

A method of processing video data for a face-to-face video communication system analyses a current video frame of a user's face and detects face aspect image variations within the current video frame in comparison to a reference frame. The current frame is decomposed into different regions based on the detected variations, and regions of interest are selected when the face aspect image variations detected are above a threshold value. Motion parameters are calculated from the face aspect image variations and a camera position is adjusted to the position of the user's face based on the parameters. Image variation data relating to the selected regions of interest of the decomposed frame is then outputted. A video processing system for carrying out the method is also provided.

## Description

The present invention relates to a video processing system and method for use in a face-to-face bi-directional video communication system. In particular, the invention relates to a video processing system and method for use in web video camera video conferencing over a communications network.

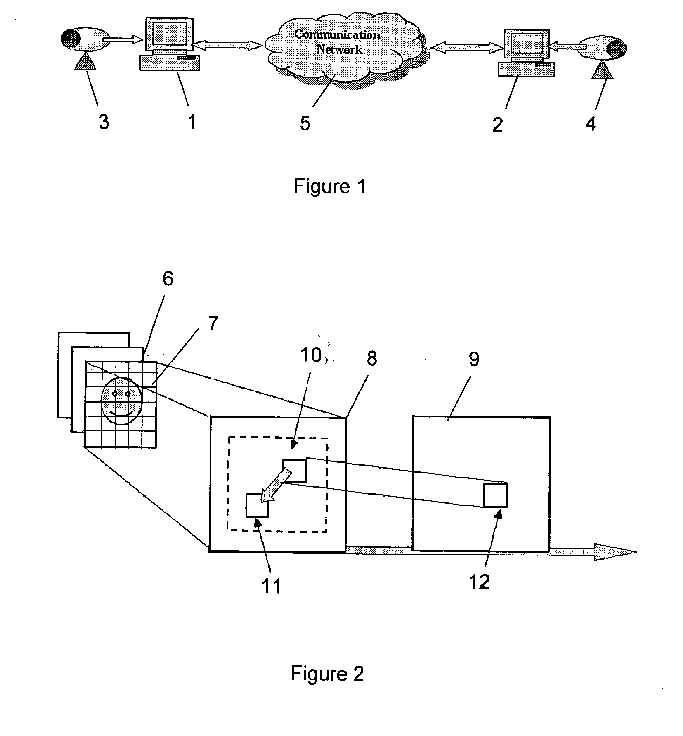

There is growing interest in the field of face-to-face video communication, such as peer-to-peer video conferencing over a packet network where factors such as real time, high quality and reliable transmission/viewing are key. In conventional peer-to-peer video conferencing systems, such as that shown in Figure 1, two computers with respective web video cameras communicate directly with one another by transmitting and receiving video frames across a direct network connection.

Various problems exist in such systems. In many cases the available bandwidth is inadequate for transmitting video frames. Additionally, current systems transmit video frames continuously despite there being no change in the content of the frames, and if bandwidth is limited this can result in information loss and/or reduction in quality of the video. Delays in transmission can also occur due to the time taken to compress moving picture frame sequences.

Known teleconferencing applications use standard video codec for the compression of face video, however these methods require high bandwidth for high quality video transmission, otherwise the transmitted face video is blurred using low bit-rate transmission. Other video coding methods such as MPEG-4 face animation standard, where a facial image is coded as changes in face model parameters, achieve very low bit-rate transmission, however in such systems it is difficult to make the synthesized face model look natural and match the input video.

Following the work of MPEG-4 face animation standard, there has been a lot of research work on model-based image coding. As an alternative, known waveform-based coding techniques encode the video signal as a waveform without specific knowledge of the semantic content of the frames. Such methods are more robust and practical than model-based image coding, however it is difficult to achieve good quality imaging under a low bit-rate, and the sophisticated technology required can also be very computationally expensive. Further known methods have tried to use a model-based coder to aid waveform-based coding, however these methods still require highly accurate face modelling and motion analysis to make the model-based prediction useful.

Coding standards such as the ISO MPEG series and the ITU H series allow for different kinds of coding modes for frames. However, for a real-time video communication only Intra (I) and Predictive (P) are considered. An I-frame is coded in isolation from other frames using transform coding, quantization and entropy coding, while a P-frame is predictively coded. An I-frame is often used to efficiently code frames corresponding to scene changes, i.e. frames that are significantly different from preceding frames and cannot be easily predicted. Frames within a scene are similar to preceding frames and hence may be coded predictively as P-frames for increased efficiency.

Frames between two successive I-frames, including the leading I-frame, are collectively called a group of pictures (GOP). Since video sequences have variable scene durations, depending on the content, it is not possible to use a fixed GOP structure to efficiently code the video sequence. This is because the position of I-frames in the sequence depends on when scene changes occur. A mechanism is therefore required to efficiently decide when to code a frame as an I-frame and when to code a frame as a P-frame. In practice, video coding standards allow for macroblocks or "MB"s (for example, 16x16 pixel regions of the frame) in a P-frame to be intra coded if they cannot be predicted efficiently. This means that even if all the frame types are set to be P, there may be many MBs in each frame that are intra coded. This macro-block based mode decision may be used to account for scene changes.

However, coding a P-frame is more computationally expensive than coding an I-frame. This is because coding P-frames uses motion estimation and compensation (and also requires these additional decisions to be taken for each MB in the frame). Hence, the main obstacle to fast compression in face-to-face teleconferencing applications is the amount of motion to be computed in the video sequence due to the speaker's face being mobile in every part thereof (for example, whole head movement, head rotation and movement of the eyes and lips). Even when using fast motion estimation algorithms, approximately 40% of the encoding time is spent on motion estimation. However, this is better as compared with the 90% taken by an exhaustive search algorithm. In both scenarios the whole picture area has to be re-scanned for every frame because motion-induced changes in the pixel pattern are likely across the whole field. Figure 2 illustrates such a process of encoding a frame.

A further drawback of known webcam systems is the lack of eye contact in desktop video teleconferencing, which substantially reduces the effectiveness of video conference. The reason for this is that the camera and the display screen cannot be physically aligned in a typical desktop environment. It results in unnatural and even awkward interactions. Current mechanisms aim to follow the user around via automatic mechanisms based on face-tracking, however conversations conducted on such face-to-face video conference systems encounter delays, due to the full frame video compression employed. Also the face-tracking algorithm used is not reliable when illumination conditions change, for example to very bright or to dark.

In real-time video conferencing type applications, all of the above-described methods have a negative impact not only on the network bandwidth usage and the quality of delivery, but also on power resources consumed in order to transmit the video frames. Therefore, a video processing system and a processing method of video frames in the field of face-to-face video communication, which aims to make use of computing and network resources on an "as needed" basis rather than a continual basis, is required.

The present invention seeks to overcome or ameliorate at least some of the above problems, by providing an alternative to fast video compression, in the form of dynamic pre-processing local to the sending terminal, which reduces the amount of picture information that needs to be compressed before being transmitted across the communication network.

According to the present invention there is provided a method of processing video data for a face-to-face video communication system, the method comprising the steps of:
analysing a current video frame of a user's face;
detecting face aspect image variations within the current video frame in comparison to a reference frame;
decomposing the current frame into different regions based on the detected variations;
selecting regions of interest when the face aspect image variations detected are above a threshold value;
calculating motion parameters from the face aspect image variations and adjusting a camera position to the position of the user's face based on the parameters; and
outputting image variation data relating to the selected regions of interest of the decomposed frame.

The present invention also provides a video processing system for use in a face-to-face video communication system, the video processing system comprising:
a face aspect unit for analysing, in use, a current video frame of a user's face;
a video image aspect variations detector for detecting, in use, face aspect image variations in the current video frame in comparison to a reference frame;
frame decomposing means for decomposing, in use, the current frame into different regions based on the variations detected;
a video image aspect variations selector arranged to select, in use, regions of interest when the face aspect image variations detected are above a threshold value;
a digital signal processing face follower for calculating, in use, motion parameters from the face aspect image variations;
adjusting means for adjusting, in use, a camera position to the position of the user's face based on the parameters; and
output means arranged to output, in use, image variation data relating to the selected regions of interest of the decomposed frame.

The present invention employs a separate local detector for head movement and rotation (e.g. using a type of face detection "eye-gaze algorithm") that directs the video camera in order to maintain a fixed position relative to the direction in which the speaker's face is pointing. In this way, the real image of face remains constantly in position on the camera. This allows constant eye contact to be maintained during a face-to-face video conversation.

As the camera is maintained in a stationary position relative to the frame of reference of the user's head and the direction of his/her gaze, most of the face region does not need to be re-scanned for every frame. Most of the pixels corresponding to the face do not change from one frame to the next; the only areas that regularly change are the area of the lips (when the user talks) the area around each eye (when the user blinks). That represents a fraction of the amount of video information that should otherwise have been computed if the face had not been stabilised relative to the camera. Only the areas with motion given by differences in pixels between successive frames need to be transmitted, and may be sent at the full frame rate without suffering a loss of quality. The amount of information to be compressed for transmission over IP, and the time spent computing motion in an MPEG-based algorithm, are therefore greatly reduced.

One example of the present invention will now be described with reference to the accompanying drawings, in which:
Figure 1 illustrates the general set-up of a video communication system;
Figure 2 illustrates the step of encoding a macro-block (MB) of an I-frame to produce an updated MB in a P-frame, over time (indicated by arrow), using motion estimation in MPEG;
Figure 3 illustrates a video processing system in accordance with the present invention;
Figure 4 illustrates the components of a web video camera system of the video processing system of the present invention;
Figure 5 is a flow diagram describing the steps performed by the video processing system of Figure 3;
Figure 6 illustrates the decomposition of a video frame into different regions by the video processing system; and
Figure 7 illustrates the steps involved in encoding reference frames from previously encoded regions of the video frame of Figure 6.

As referred to above, Figure 1 shows a first computer 1 and a second computer 2 each with a respective web video camera 3, 4, which are in direct communication with each other over a network connection 5. The first web video camera 3 transmits video frames across the direct network connection 5 from the first computer 1 to the second computer 2, and vice-versa.

Captured video frames are encoded as shown in Figure 2, which illustrates the encoding of a frame 6 of MBs 7 from an original I-frame 8, to a P-frame 9, over time (indicated by arrow). A search area 10 is indicated by the dashed line within the I-frame. A best match position 11 for the MB is computed to produce the current updated MB 12.

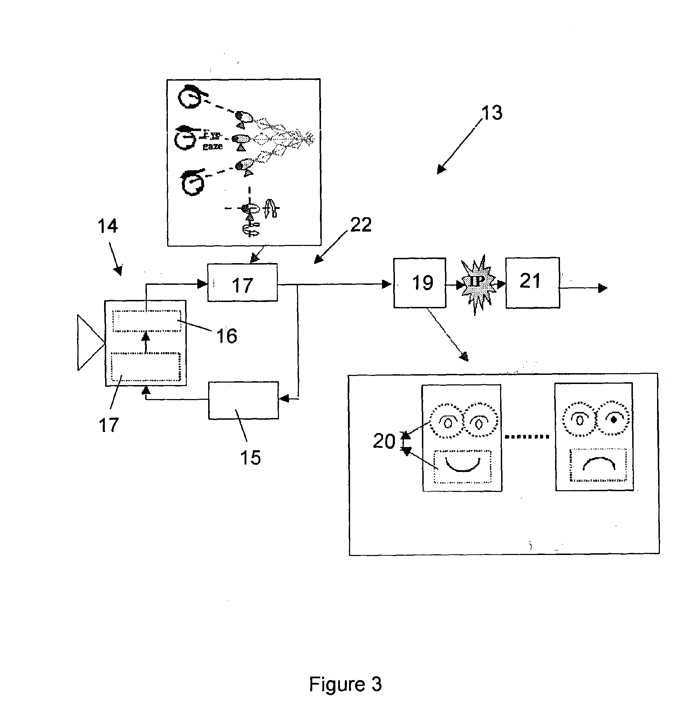

Referring to Figure 3, this illustrates transmitting a peer-to-peer communication over a video communication system 13 according to one example of the present invention. The video communication system 13 employs a web cam system 14 which includes a motor 15 for driving the movement of a camera 16 via a camera mounting 17. The web cam system 14 is used in conjunction with a face-tracking facility or face follower 18 (as illustrated in Figure 3 and described later). The output of the web cam system 14 is connected to a device which includes an encoder 19. The encoder 19 receives data relating to selective regions 20 of each frame of a video sequence captured by the camera 16 for encoding; these regions 20 preferabiy reiate to regions of motion from each frame.

Unlike conventional peer-to-peer web cam systems, only regions of motion from each video frame are uploaded continuously, as opposed to full frame information at any time. Encoded video is arranged into packets and sent over the communication network. The communication network can be, for example, the internet, an intranet or other wide or area network. At the receiver side, packets are received by a computing system with decoding facilities 21, decoded and displayed on the receiver's display unit (not shown).

By encoding only the selective regions 20 of the face, a smaller quantity of data is transmitted over the communication network, thereby avoiding the unnecessary transmission of video frames, which can lead to a loss of frames and degraded video transmission.

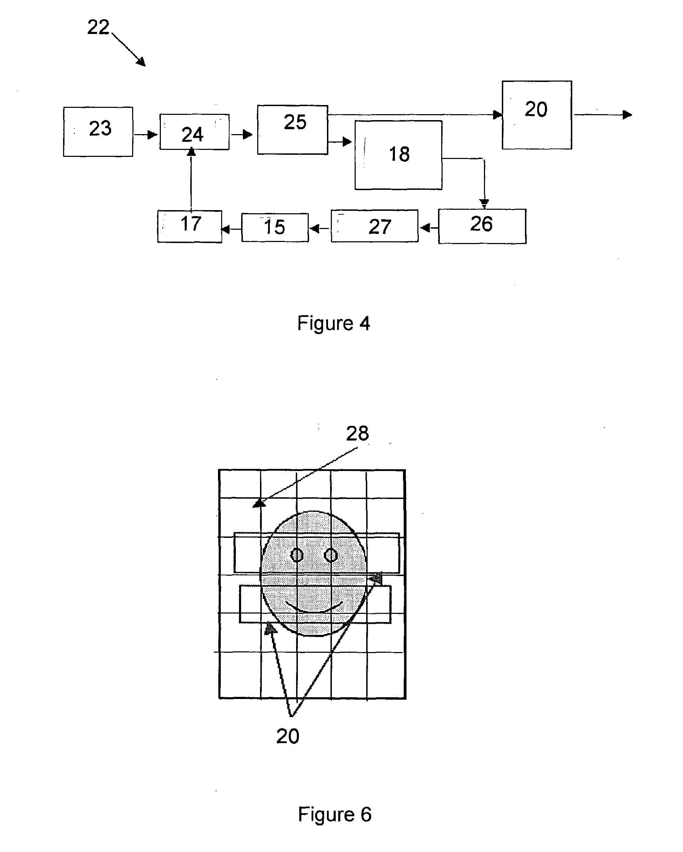

Figure 4 illustrates a section of a video processing system 22 of a video communication system 13 including the web cam system 14 previously described, which is capable of analysing the face aspect of a user 23 and exploiting this information in order to achieve better compression. The video processing system 22 includes a face aspect unit 24 which inputs the video frames into a video image aspect variations unit 25 and further into a DSP (digital signal processing) face follower unit 18. The main function of the DSP face follower unit 18 is to implement an automatic detection of facial features in the video frame by analyzing the face aspect image variations. For instance, the algorithm used for this purpose can be an eye-gaze type algorithm or any other face detection algorithms which are reliable during illumination condition changes and which can also be successfully implemented in real-time.

The DSP face follower unit 18 calculates motion parameters that indicate the changes of motion appearing in the facial frame based on the variations. The DSP face follower unit 18 is connected into a movement instruction unit 26, which registers any motion changes that appear in the facial video frame and acts upon on those changes, activating a decision device unit 27. This unit 27 performs a filtering type operation and transfers a set of filtered motion parameters to the motor. The motor 15 coordinates the camera mount 17, which changes the position of the camera 16 (not shown) according to the set of parameters received. This loop operation is ideally completed in reai-time, and the camera 16 is then in a position ready to grab a new frame of the video sequence.

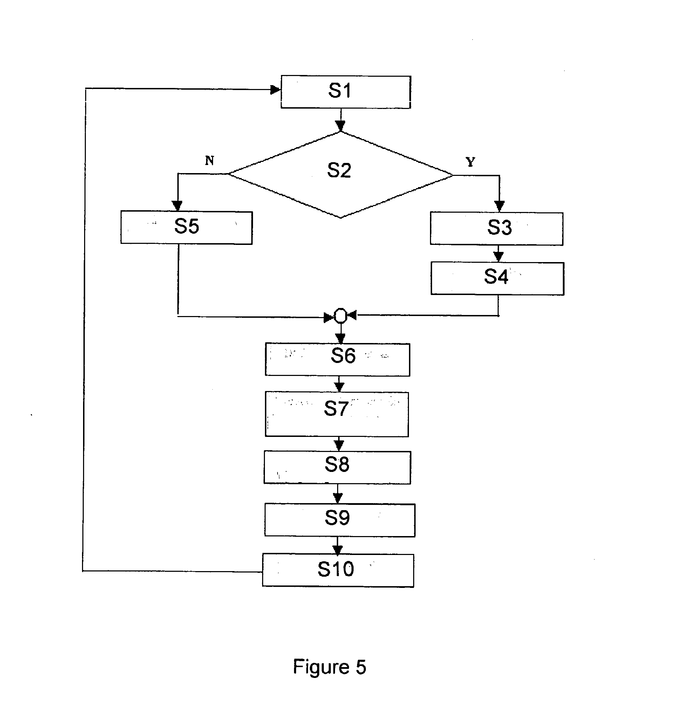

The functions of the video processing system 22 are described in Figure 5. The video camera maintains a fixed position relative to the direction in which the speaker's face is pointing, hence the real image of the speaker's face remains constantly in position on the camera.

The face aspect in each face video frame is analysed (S1) for any variations that may appear. The majority of the pixels corresponding to the face do not change from one frame to the next, with the exception of the lips (when the person talks), and the eyes (when the person blinks). These regions are considered to be regions of interest (ROI) and represent the area to be encoded. Face aspect information is sent to the video image aspect variations unit 25 and analysed for any variations (S2). If any variations are detected (Y) (this may be in respect to a chosen threshold), ROIs are located (S3) and sent (S4) to the encoder 19. However, if large variations exist (perhaps equivalent to scene changes), the ROI will comprise the entire face frame and all will be sent to the encoder 19 for encoding. If no variations exist, or if the variations are below a chosen threshold value (N), then no changes have appeared in the face image frame and there is no video information to be encoded (S5).

The DSP face follower unit 18 is activated and proceeds with the calculation (S6) of the motion parameters for adjusting the camera position relative to the speaker's face. The DSP face follower unit 18 detects the facial features and calculates motion parameters in relation to any movement which has occurred. Movement is then instructed (S7) by activating the decision device unit 27 which adjusts the parameters by, for example, filtering them (S8). The motor 15 is then activated (S9) and acts to move the position (S10) of the camera mount in accordance with the motion parameters.

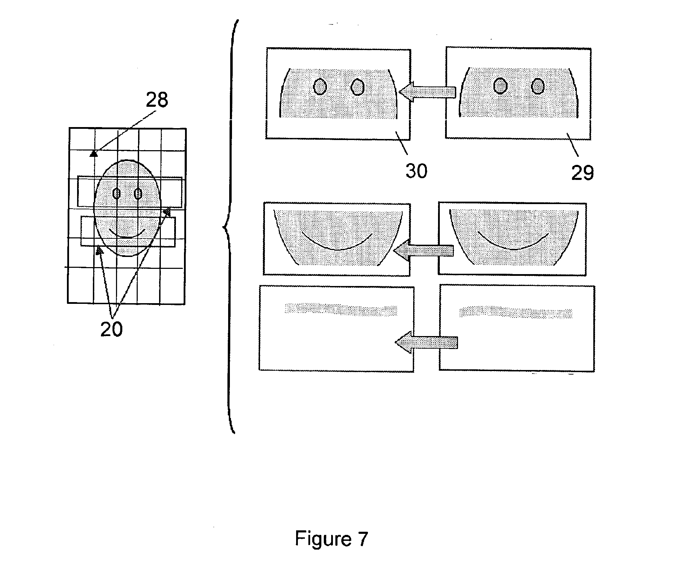

The amount of data to be encoded and transmitted through the communication network is therefore limited to that of the ROI areas, which represent only a fraction of the whole video sequence. In this way very limited knowledge of the face is used to improve coding efficiency and reduce the amount of data to be transmitted. The face video is decomposed into background 28 and regions of interest (ROI) 20 in relation to the position of the face, as shown in Figure 6 (see also Figure 3).

This decomposition of the frame is based on the function implemented by the video-processing system 22 as described above. Each of the areas is encoded with an encoding scheme for low bit rate (e.g. H.263, H.264). Different regions of the frame have different levels of perceptual importance: background data is less important than ROI data, and is encoded at the initial frame and updated very infrequently.

Only the first frame of the face video sequence is encoded as I-frame, the rest of the frames are encoded as P-frames. A reference frame (I-frame) is encoded only when the video processing system 22 detects large variations of the face aspect and decides that the ROI should be the entire face video frame. Furthermore, a distinction is made between various sub-regions of the ROIs for encoding purposes. The area around the eye in the face video frame is the ROI-eye area; the area around the mouth in the face video frame is the ROI-mouth area, and each of these sub-regions is encoded individually with the encoder 19 (e.g. H.264).

A reference database of frames is created and kept for each of the ROI sub-regions. For instance, as shown in Figure 7, a current frame 29 of the ROI-eye area is encoded in reference to a previously encoded and reconstructed ROI-eye frame 30.

The present invention therefore provides a video processing system 22 that beneficially reduces network bandwidth consumption because only selected regions of the face video frames, which contain high perceptual information and show the majority of movement in a face video frame sequence, are transmitted over the communication network.

A further benefit of the present invention is the improved effectiveness of video communication (e.g. over IP) by maintaining permanent eye contact (face-to face). The physical movement of the camera (in a closed loop with a high quality facial detector) also avoids the time-consuming delays created by the video encoder (e.g. MPEG) in current systems.

An additional benefit is the enhancement of the error-resilience technique by using camera motion parameters as received at the decoder. By additionally combining the camera-motion parameters with the existing error-resilience method the recovery of lost information can be made more accurate. The camera motion parameters can be transmitted at relatively low bandwidth.

## Claims

1. A method of processing video data for a face-to-face video communication system, the method comprising the steps of:
analysing (S1) a current video frame of a user's face;
detecting (S2) face aspect image variations within the current video frame in comparison to a reference frame;
decomposing (S3) the current frame into different regions based on the detected variations;
selecting regions of interest when the face aspect image variations detected are above a threshold value;
calculating (S6) motion parameters from the face aspect image variations and adjusting (S10) a camera position to the position of the user's face based on the parameters; and
outputting (S4) image variation data relating to the selected regions of interest of the decomposed frame.

2. A method according to claim 1, the method further comprising the step of filtering (S8) the motion parameters calculated from the face aspect image variations.

3. A method according to claim 1 or 2, the method further comprising the step of encoding the outputted image variation data relating to selected regions of interest of the decomposed frame.

4. A method according to any preceding claim, wherein the regions of interest are further decomposed into sub-regions, the sub-region image variation data being outputted and encoded individually.

5. A method according to any preceding claim, the method further comprising the steps of:
storing face aspect image variation data of previously decomposed frames in a reference database; and
comparing a current frame to a stored reference frame in order to detect the face aspect image variations of the current frame.

6. A method of transmitting video data over a video communication network, the method comprising the steps of:
capturing a video frame;
processing current video frame data according to the method of any of claims 1 to 5;
sending selected output data to an encoder (19);
encoding the selected data; and
transmitting the encoded data over a communication network.

7. A video processing system (22) for use in a face-to-face video communication system (13), the video processing system comprising:
a face aspect unit (24) for analysing, in use, a current video frame of a user's face;
a video image aspect variations detector (25) for detecting, in use, face aspect image variations in the current video frame in comparison to a reference frame;
frame decomposing means for decomposing, in use, the current frame into different regions based on the variations detected;
a video image aspect variations selector arranged to select, in use, regions of interest when the face aspect image variations detected are above a threshold value;
a digital signal processing face follower (18) for calculating, in use, motion parameters from the face aspect image variations;
adjusting means for adjusting, in use, a camera position to the position of the user's face based on the parameters; and
output means arranged to output, in use, image variation data relating to the selected regions of interest of the decomposed frame.

8. A system according to claim 7, the system further comprising a decision device unit (27) arranged to filter, in use, the motion parameters.

9. A system according to claim 7 or 8, the system further comprising an encoder (19) for encoding, in use, the outputted image variation data relating to selected regions of interest of the decomposed frame.

10. A system according to any of claims 7 to 9, wherein the video image aspect variation unit (25) is arranged to further decompose the regions of interest into sub-regions, the sub-region image variation data being outputted and encoded individually.

11. A system according to any of claims 7 to 10, the system further comprising:
a reference database arranged to store face aspect image variation data of previously decomposed frames, the video aspect image variations unit (25) being arranged to compare, in use, a current frame to a stored reference frame in order to detect the face aspect image variations of the current frame.

12. A video communication system comprising:
a camera (16) arranged to capturing, in use, a video frame;
a video processing system (22) according to the system of any of claims 7 to 11;
an encoder (19) arranged to encode, in use, data output by the video processing system; and
a transmitter arranged to transmit, in use, the encoded data over a communication network.
